# EUROPEAN PATENT APPLICATION

(11) **EP 0 862 173 A1**
(43) Date of publication of application: **02.09.1998**
(21) Application number: 98301023.2
(22) Date of filing: 12.02.1998
(51) Int. Cl.: G11B 17/028, G11B 17/04

(54) **Disk driving apparatus**

(30) Priority: 27.02.1997 JP 43754/97
(71) Applicant: ALPS ELECTRIC CO., LTD., Ota-ku Tokyo 145 (JP)
(72) Inventor: Takigawa, Makito, Iwaki-shi, Fukushima-ken (JP)
(74) Representative: Kensett, John Hinton

(57) **Abstract**

A disk driving apparatus which includes a first chassis (17) having a disk rotating spindle motor (20) of which a drive shaft is provided with a turntable (19), and a second chassis (10) having a disk clamper (11) for chucking a disk (8) together with the turntable (19). The disk clamper (11) has a magnet portion (15) and is vertically movably mounted to the second chassis (10). Magnets (21,16) are attached to the turntable (19) of the spindle motor (20) and to the second chassis (10) opposingly to the magnetic portion (15) of the disk clamper (11).

## Description

The present invention relates to a disk driving apparatus for chucking and driving a disk.

Disk driving apparatuses such as VTRs, CD players, CD-ROM changers, and the like, are constructed so that a disk placed on a tray is inserted thereinto, and the disk is chucked and driven.

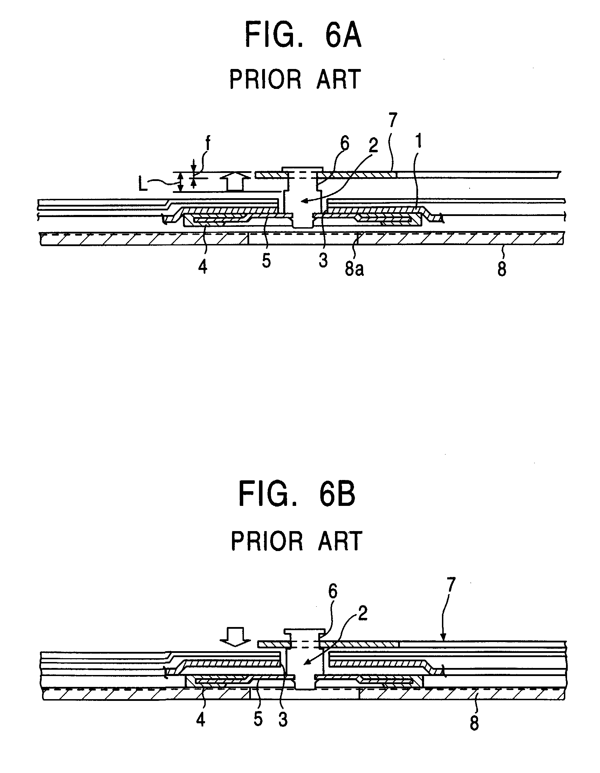

Figs. 6A and 6B illustrate conditions of a conventional disk driving apparatus at the time of chucking a disk, and at the time of loading a tray.

Referring to these drawings, there are provided a fixed chassis 1, a shaft 2 inserted into a hole 3 of the fixed chassis 1, a clamper 4 fixed to the lower end of the shaft 2 and having a magnetic portion 5, a small diameter section 6 formed on the upper end of the shaft 2, a clamper actuating lever 7 for moving the shaft 2 and the clamper 4 upward and downward in engagement with the small diameter section 6, and a disk 8 having a hole 8a formed in the center thereof.

The disk 8 is clamped by the clamper 4 and a turntable (not shown) fixed to a drive shaft of a spindle motor, and is attracted and chucked by a magnetic force of a magnetic portion of the turntable.

An operation of the conventional disk driving apparatus will now be described.

At the time of inserting the disk 8, the clamper 4 is raised upward by the clamper actuating lever 7, whereby the disk 8 can be smoothly inserted without striking against the clamper 4, as shown in Fig. 6A.

When the insertion of the disk 8 is completed, as shown in Fig. 6B, a turntable (not shown) moves upward and at the same time, the clamper actuating lever 7 moves downward to move the shaft 2 and the clamper 4 downward, so that the disk 8 is clamped by the clamper 4 and the turntable, and is chucked by a magnetic force of a magnetic portion (not shown).

This allows the disk 8 to be rotated with the rotation of the turntable.

According to the conventional disk driving apparatus, however, the clamper actuating lever 7 is engaged with the small diameter section 6 of the shaft 2, but it is necessary to make the length L of the small diameter section 6 longer than the thickness t of the clamper actuating lever 7 in order to certainly chuck the disk 8 by the magnetic force of the magnetic portion of the turntable even when there are variations in size of components.

Therefore, so long as the clamper actuating lever 7 moves within the small diameter section 6, it is necessary to elongate the shaft 2 to some extent and the elongated portion projects above the clamper actuating lever 7, and at the same time, a stroke of the vertical movement of the clamp actuating lever 7 increases in length, so that the thickness of the apparatus cannot be reduced.

Accordingly, it is an object of the present invention to provide a disk driving apparatus in which a clamper actuating lever and a small diameter section of a shaft required for the conventional disk driving apparatus are eliminated and the shaft can be shortened, whereby the entire thickness of the apparatus can be reduced, and which can omit the clamper actuating lever, whereby the number of components can be reduced and an assembly process can be simplified.

According to an aspect of the present invention, there is provided a disk driving apparatus including a first chassis having a disk rotating spindle motor of which a drive shaft is provided with a turntable, and a second chassis having a disk clamper for chucking a disk together with the turntable, wherein the disk clamper has a magnetic portion, and is vertically movably mounted to the second chassis, and wherein magnets are attached to the turntable of the spindle motor and to the second chassis opposingly to the magnetic portion of the disk clamper.

Embodiments of the invention will now be described, by way of example only, with reference to the accompanying drawings in which:
Figs. 1A and 1B illustrate an embodiment of a disk driving apparatus according to the present invention under conditions at the time of disk chucking and in the course of tray loading, respectively;
Fig. 2 illustrates a condition of the tray loading of Fig. 1;
Fig. 3 is a vertical sectional view of Fig. 1A;
Fig. 4 is a vertical sectional view of Fig. 2;
Figs. 5A and 5B are enlarged views each showing a main part of Figs. 1A and 1B; and
Fig. 6A illustrates a condition of a conventional disk driving apparatus at the time of disk chucking; and
Fig. 6B illustrates a condition of the conventional disk driving apparatus at the time of tray loading.

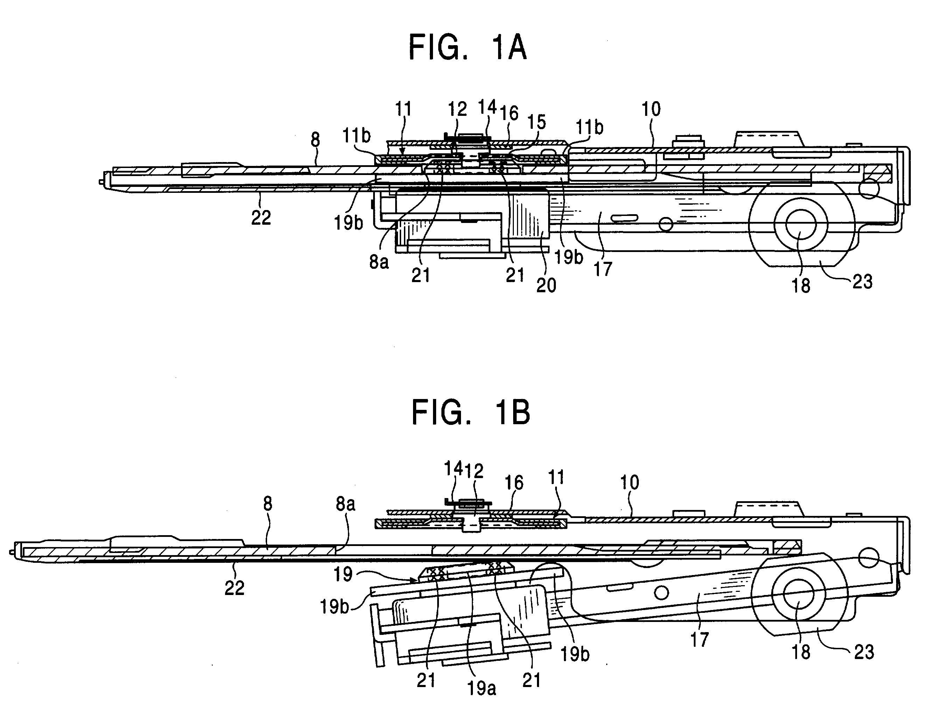

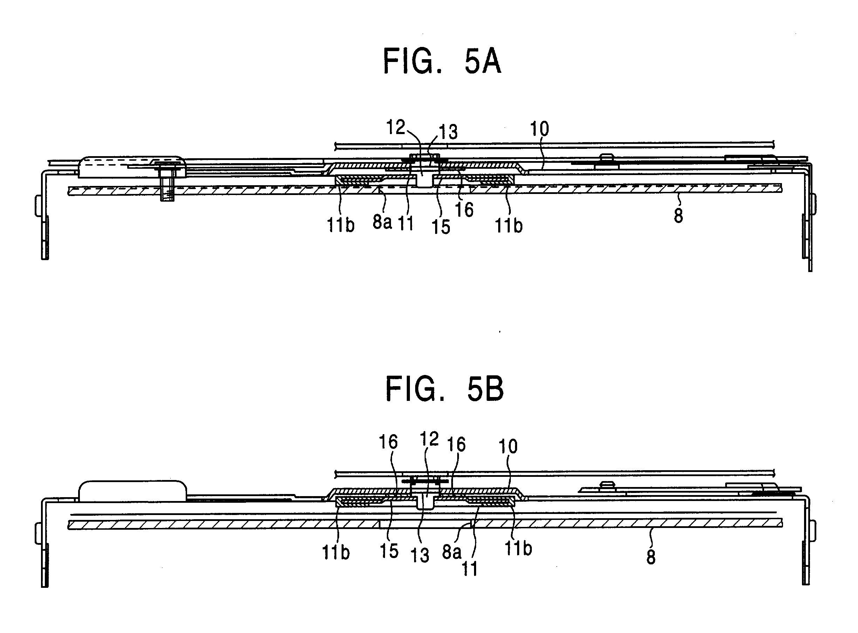

The preferred embodiment of a disk driving apparatus according to the present invention will be described with reference to Figs. 1A to 5B.

Referring to the drawings, a disk clamper 11 for chucking a disk 8 mounted on a tray 22 is supported by a second chassis 10. A shaft 12 of the disk clamper 11 is inserted through a through hole 13 formed in the second chassis 10, whereby the disk clamper 11 is vertically movably and rotatably supported. A fallout preventing member 14 is fitted into the upper portion of the shaft 12 projecting from the through hole 13. The disk clamper 11 has a magnetic portion 15 formed of a ferromagnetic substance, and a pressing portion llb which covers the outer periphery of the magnetic portion 15 and which is formed of an elastic material or a material having a large frictional resistance. A disc-like magnet 16 having a hole 16a in its center portion is fixed to the lower surface of the second chassis 10 opposed to the magnetic portion 15. The center portion of the magnetic portion 15 to be adhered to the magnet 16 is formed in the shape of a projected step so that it can be certainly adhered. The magnetic force of the magnet 16 is set so that the disk clamper 11 moves upward in the direction of the second chassis 10 when the disk clamper 11 is moved downward by its weight until the fallout preventing member 14 strikes against the top surface of the second chassis 10.

Below the second chassis 10, the first chassis 17 is rotatably supported by a shaft 18 at its one end portion. A turntable 19 for placing and rotating a disk thereon, a spindle motor 20 having a drive shaft to which the turntable 19 is fixed, and an optical pickup (not shown) for reproducing information recorded in the disk 8 driven by the turntable 19 are mounted on the first chassis 17. In addition, a motor 23 for use in tray loading having a drive shaft which is arranged coaxially with the shaft 18 is mounted on the first chassis 17.

The turntable 19 has a projection 19a having the shape of a trapezoid in cross section formed in the center thereof, and a flange 19b formed on the outer periphery thereof. Magnets 21 are provided on the projection 19a opposingly to the magnetic section 15 of the disk clamper 11. Therefore, at the time of chucking, the magnetic portion 15 of the disk clamper 11 is moved downward by magnetic forces of the magnets 21 of the turntable 19 to chuck the disk 8, and the disk 8 is rotated with the rotation of the turntable 19.

The magnetic forces of the magnets 21 of the turntable 19 are set so as to overcome the magnetic force of the magnet 16 of the second chassis 10 to move the turntable 19 downward when the first chassis 17 moves upward upon completion of the tray loading to come closer to the magnetic portion 15 of the disk clamper 11. The turntable 19 may be moved downward at least from immediately before the turntable 19 moves upward to a predetermined position.

In this embodiment, mechanical sections such as the second chassis 10 and the first chassis 17 are contained in a CD-ROM changer, and a magazine (not shown) accommodating therein a plurality of trays 22 each mounting a disk 8 is set to the CD-ROM changer. Further, the mechanical sections are moved upward and downward to a desired heightwise position of the tray 22 by a mechanical section moving mechanism (not shown), and a tray 22 is selected and pulled out of the plurality of trays in the magazine to be subjected to the tray loading.

An operation of the embodiment will now be described.

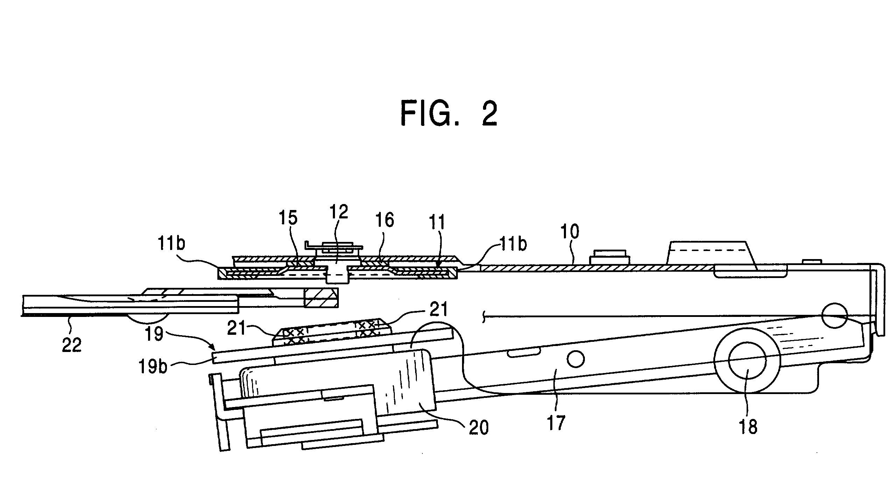

Fig. 2 illustrates a condition of tray loading in which the first chassis 17 is maintained at the lowermost position by a lowering mechanism (not shown), the turntable 19 is also located at the lowermost position and separated from the disk clamper 11, and the upper surface of the magnetic section 15 of the disk clamper 11 and the magnet 16 are attracted by the magnetic force of the magnet 16 of the second chassis 10. Therefore, the disk clamper 11 is located at a position retracted upward from a moving range of the tray 22, and the turntable 19 is retracted downward from the moving range of the tray 22, so that the tray 22 can be inserted between the turntable 19 and the disk clamper 11 from the left side of the drawing.

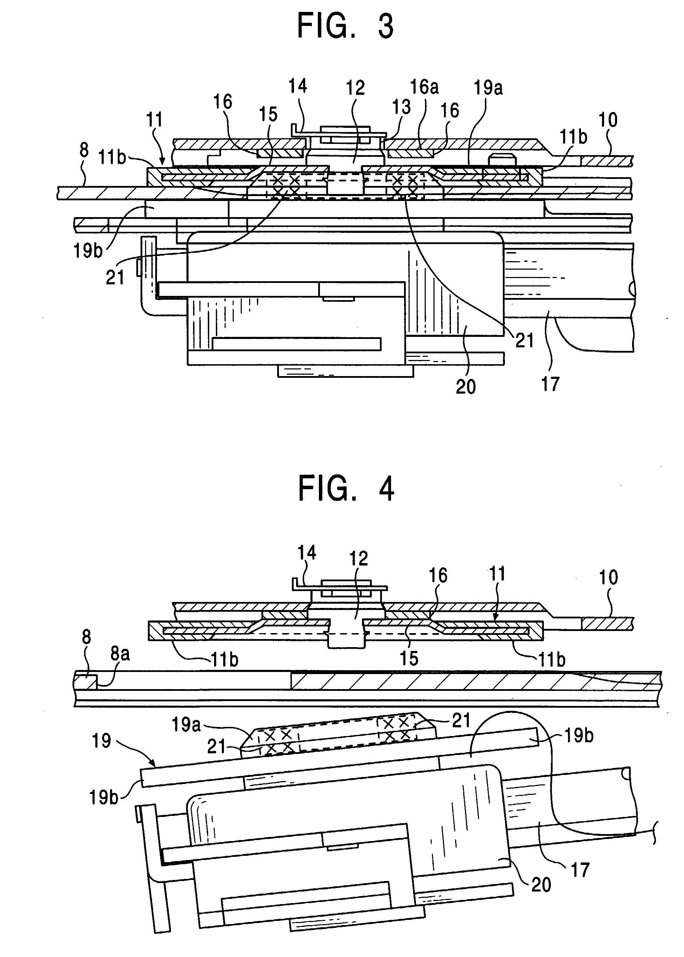

The tray 22 is inserted to the innermost portion of the apparatus via the conditions of Fig. 1B and Fig. 4. Under this condition, the center hole 8a of the disk 8 mounted on the tray 22 reaches below the disk clamper 11. When the insertion of the tray 22 to the innermost section is detected by a sensor (not shown), a driving device (not shown) is actuated to move the first chassis 17 upward, whereby the turntable 19 of the first chassis 17 is moved upward to come closer to the disk clamper 11, so that the projection 19a of the turntable 19 is fitted into the hole 8a of the disk.

When the turntable 19 comes closer to the disk clamper 11, the magnetic forces of the magnets 21 of the turntable 19 for attracting the magnetic portion 15 of the disk clamper 11 gradually become greater than the magnetic force of the magnet 16 of the second chassis 10 for attracting the magnetic portion 15 of the disk clamper 11, and the disk clamper 11 is separated from the magnet 16 of the second chassis 10 to move downward, so that the magnetic portion 15 of the disk clamper 11 is attracted onto the projection 19a of the turntable 19, and the disk 8 is chucked by the pressing portion 11b of the disk clamper 11 and by the flange 19b of the turntable 19 so as to be rotated together with the turntable 19, as shown in Fig. 1A and 3. When the disk 8 is chucked, as shown in Fig. 1A, the disk 8 is raised by the turntable 19 to be separated from the tray 22.

An operation for releasing the chucking of the disk will be described.

When, for example, a CD-ROM changing switch (not shown) is operated under the condition shown in Figs. 1A and 3, the spindle motor 20 is stopped if information recorded in the disk 8 is being reproduced, and then a motor (not shown) is actuated to rotate the first chassis 17 counterclockwise about the shaft 18. The spindle motor 20 and the turntable 19 move downward with the rotation of the first chassis 17, and are gradually separated from the disk clamper 11 provided on the side of the top surface of the disk 8. In addition, the disk 8 which has been raised by the turntable 19 is also placed on the tray 22.

Therefore, the magnetic forces of the magnets 21 of the turntable 19 for attracting the disk clamper 11 is gradually weakened, and the magnetic force of the magnet 16 of the second chassis 10 for attracting the disk clamper 11 becomes greater. Then, the disk clamper 11 is moved upward by the magnet force of the magnet 16 of the second chassis 10 with the shaft 12 being guided, and is adhered to the lower surface of the magnet 16 of the second chassis, as shown in Fig. 1B or Fig. 4.

After the disk clamper 11 and the turntable 19 have retracted from the moving range of the tray 22, the tray 22 is moved leftward and accommodated in the magazine (not shown) and then, the mechanical sections are moved to the tray 22, and the tray 22 is pulled out so as to repeat the foregoing operation.

The present invention can be applied to a disk driving apparatus of a type in which the first chassis does not rotate but moves upward and downward.

In one form of the invention, there is provide a disk driving apparatus including a first chassis 17 having a disk rotating spindle motor 20 of which a drive shaft is provided with a turntable 19, and a second chassis 10 having a disk clamper 11 for chucking a disk 8 together with the turntable 19, wherein the disk clamper 11 has a magnetic portion 15, and is vertically movably mounted to the second chassis 10, and wherein magnets 16 and 21 are attached to the turntable 19 of the spindle motor 20 and to the second chassis 10 opposingly to the magnetic portion 15 of the disk clamper 11. This form of the invention offers the following advantages. At the time of the tray loading, the turntable 19 is separated from the disk clamper 11, and the force of attraction between the magnetic portion 15 of the disk clamper 11 and the magnet 16 of the second chassis 10 becomes greater, so that the disk clamper 11 is attracted to the second chassis 10. When the turntable 19 comes closer to the disk clamper 11 after the completion of the tray loading, the force of attraction between the magnetic portion 15 of the disk clamper 11 and the magnets 21 of the turntable 19 becomes greater, so that the disk clamper 11 is moved downward. Therefore, the clamper actuating lever, and the small diameter section of the shaft of the clamper required for the conventional disk driving apparatus are eliminated and the shaft can be shortened, so that the entire thickness of the apparatus can be reduced. In addition, the clamper actuating lever can be omitted, whereby the number of components can be reduced, and an assembling process can be simplified.

## Claims

1. A disk driving apparatus, comprising:
a first chassis having a disk rotating spindle motor of which a drive shaft is provided with a turntable; and
a second chassis having a disk clamper for chucking a disk together with said turntable,
wherein said disk clamper has a magnetic portion, and is vertically movably mounted to said second chassis, and
wherein magnets are attached to the turntable of said spindle motor and to said second chassis opposingly to the magnetic portion of said disk clamper.

2. A disk driving apparatus as claimed in claim 1,
wherein said first chassis is rotatably supported by said second chassis.
